# EUROPEAN PATENT APPLICATION

(11) **EP 2 811 738 A2**
(43) Date of publication of application: **10.12.2014**
(21) Application number: 14171481.6
(22) Date of filing: 06.06.2014
(51) Int. Cl.: H04N 5/225

(54) **Mobile phone or portable PC with a camera**

(30) Priority: 07.06.2013 LU 92208
(71) Applicant: Galuszka, Andrzej Jaroslaw, 5573 Remich (LU)
(72) Inventor: Galuszka, Andrzej Jaroslaw, 5573 Remich (LU)
(74) Representative: Office Freylinger

(57) **Abstract**

A mobile phone or portable PC is proposed, which comprises a camera with an optical axis. A transparent cover is arranged movable relative to the camera, in such a way that the camera and the transparent cover can be brought into a first relative position and into a second relative position. In the first relative position, the transparent cover lies on the optical axis and the camera and the transparent cover form together an optical fingerprint sensor, which may be used for optical fingerprint imaging or an optical reader for reading graphical data codes. In the second relative position, the transparent cover lies off the optical axis, so that the camera may be used for taking pictures or recording video. The mobile phone or portable PC may additionally comprise, amongst others, a guiding element that helps user to place his finger at substantially the position for different readings.

## Description

### Technical field

The present invention generally relates to a mobile phone or portable PC (personal computer) having a camera.

### Background Art

Equipping mobile phones or portable PCs (hereinafter referred to jointly as "mobile devices") with one or more cameras is a trend in the consumer electronics market. Nowadays, mobile devices are frequently provided with a front camera that is fixedly attached on the front side of the mobile device, and a back camera that is fixedly attached on the back side of the mobile device. As used herein the term "front side" designates the side of the mobile device that typically faces the user when the mobile device is in use and which typically comprises the mobile device's display screen. Conversely, the term "back side" herein designates the side of a mobile device that typically faces away from the user when the mobile device is in use. The front camera may be used amongst others for video telephony, whereas the back camera is specifically designed for taking pictures or/and recording video.

An alternative camera arrangement is described in WO 2012/151889. This document relates to a mobile phone that is equipped with a camera, which can be used as both a front and a back camera. The camera is connected to the mobile phone housing via a rotating member. The rotating member has a rotation start position in which the camera becomes a front camera and a rotation end position in which the camera becomes a back camera.

Another important aspect in the context of mobile phones or portable PCs is user authentication. Many mobile phones or portable PCs include Internet connectivity and use technologies such as Wi-Fi, Bluetooth or Ethernet to connect to the Internet or (wireless) networks. Nowadays, an increasing amount of people buy articles online, make money transactions or access confidential information on the Internet with their mobile phone or portable PC. As a result it is important to make sure that no unauthorized person can get access by pretending a false identity.

A convenient way to verify a user's identity is biometric authentication. WO 2004/089011 relates to a mobile phone that is equipped to operate in authenticated and unauthenticated mode of operation, depending on whether a user has been authenticated. In one embodiment, the mobile phone includes a fingerprint reader to enable a user to input his fingerprint for authentication.

Even though mobile phones with fingerprint readers have been proposed, they have not yet been successful in the market of consumer electronics, mainly due to the costs related therewith. An overriding characteristic of consumer electronic products is the trend of ever-falling prices. As a result, additional features or improved functionality have to be provided at moderate cost.

### Technical problem

It is an object of the present invention to provide a mobile device with functionalities to authenticate the user. The object is achieved by the invention as claimed in claim 1.

### General Description of the Invention

In accordance with the invention, a mobile phone or portable PC, such as, e.g. a laptop, netbook, tablet etc., is proposed, which comprises a camera with an optical axis. As used herein, the term "optical axis" designates an imaginary line that defines a path along which light propagates from the center of the camera's field of view to the centre of the image sensor. The mobile phone or portable PC further comprises a transparent cover, which is arranged movable relative to the camera, in such a way that the camera and the transparent cover can be brought into a first relative position and into a second relative position. In the first relative position, the transparent cover lies on the optical axis and the camera and the transparent cover form together an optical fingerprint sensor or an optical reader for reading (1 D or 2D) graphical data codes, such as e.g. barcodes, matrix codes, QR-codes etc., which may be used for optical fingerprint imaging and data code reading, respectively. In the second relative position, the transparent cover lies off the optical axis, so that the camera may be used for taking pictures or recording video.

Furthermore, the camera can have a lens and an image sensor, such as, e.g. a CCD (charged coupled device) sensor or CMOS (complementary metal-oxide-semiconductor) sensor.

Different embodiments are possible regarding the mobility of the camera and the transparent cover relative to each other. According to a first embodiment, the transparent cover is fixedly attached to the mobile phone or portable PC housing whereas the camera is moveably (rotatably and/or translatably) coupled to the mobile phone or portable PC housing. In the first relative position, the camera points through the transparent cover. According to a particularly preferred variant of the invention, the camera is rotatably coupled to the mobile phone or portable PC housing such that it can be rotated into the second relative position, in which the camera becomes a front camera on the front side of the mobile phone or portable PC housing, and into a third relative position, in which the transparent cover lies off the optical axis and the camera becomes a back camera on the back side of the mobile phone or portable PC housing.

According to a second embodiment, the camera is fixedly attached to the mobile phone or portable PC housing and the transparent cover is moveably (rotatably and/or translatably) coupled to the mobile phone or portable PC housing.

According to a preferred embodiment of the invention, the transparent cover is made of a solid plastic or glass, which may protect the camera lens in the first relative position. The transparent cover comprises an input surface that is imaged through the optical element and the camera optics onto the image sensor. The distance between the input surface and the camera is equal or greater than a minimum focal distance, so that the user's finger or the data code to be read may be imaged sharply onto the image sensor when applied on the input surface. Preferably, the transparent cover comprises an optical element (e.g. a lens) that adjusts the minimum focal distance such that the user's finger or the data code, when placed on the input surface, is sharply imaged. As a consequence, a close-up image having a higher magnification compared to cameras without such an optical element can be taken. Alternatively, or additionally, the optical element comprises a magnification element, e.g. a magnification glass such as a magnifying lens, for magnifying the image of the user's finger or the data code.

The mobile phone or portable PC preferably comprises a position sensor for detecting if the camera and the transparent cover are in the first relative position, in the second relative position or, possibly, in the third relative position. The position sensor type is chosen in accordance with the type of relative movement (rotation or translation). If the movement between the camera and the transparent cover is a rotation, e.g. a rotary encoder or a rotary switch can be operationally coupled to the mobile phone or portable PC. Alternatively, if the movement between the camera and the transparent cover is a translation, e.g. a linear encoder or switch can be operationally coupled to the mobile phone or portable PC.

Different operational modes of the mobile phone or portable PC and/or its camera are preferably associated with the first, the second and/or the (optional) third relative position. For instance, in the first relative position, an application for taking fingerprints is preferably executed. Alternatively, in the first relative position, an application for reading data codes may be executed by the mobile device. In a second mode associated to the second relative position the mobile phone or portable PC preferably executes an application for taking pictures and/or recording video of objects that are at a mid-distance (0.3 m to 0.9 m) from the camera, e.g. a video telephony application. A third mode can be associated to the third relative position. In the third mode, the mobile phone or portable PC is preferably configured to execute applications for taking pictures and/or recording video of objects that are at "long" distance (i.e. at more than about 1 m) from the camera.

The operational modes could e.g. be engaged automatically by the relative position sensor when the camera and the transparent cover are brought manually into the respective relative position. Alternatively, each mode could be engaged by the user starting a corresponding application. According to yet another embodiment, the mobile phone or portable PC may comprise an actuator (e.g. a motor) for moving the camera and/or the cover and the mobile phone or portable PC may be configured to automatically bring the camera and the cover into the first, the second or/and third relative position if the associated mode is engaged by the user starting an application associated thereto.

According to a preferred embodiment of the invention, the camera is located in a corner of the mobile phone or portable PC housing, e.g. in a corner of the display screen housing.

The mobile phone or portable PC preferably comprises a light source (e.g. a visible or infrared LED or flashlight). The light source is preferably configured to backlight the transparent cover in the first relative position. There is a considerable advantage of backlighting the transparent cover because the image can be taken with lower image sensor sensitivity, leading to a sharper image of a fingerprint.

Preferably, the light source is configured to be usable as a flash in the second and/or third relative position.

According to a preferred embodiment of a device in accordance with the invention, the angle of rotation between the first relative position and the second relative position is substantially 90°. Furthermore, the angle of rotation between the third relative position and the first relative position is preferably substantially 90°. In other embodiments of the invention, different angles could be used.

### Brief Description of the Drawings

Further details and advantages of the present invention will be apparent from the following detailed description of a not limiting embodiment with reference to the attached drawings, wherein:
Fig. 1 is schematic front view of a mobile phone or portable PC in accordance with a preferred embodiment of the invention;
Fig. 2 is a schematic lateral view of the mobile phone or portable PC of fig. 1, where the camera is in a position for reading a fingerprint or data code;
Fig. 3 is a schematic lateral view of the mobile phone or portable PC of fig. 1, where the camera is in a position for detecting an object facing the front side of the mobile phone or portable PC at a mid-distance in front of the mobile phone or portable PC housing;
Fig. 4 is a schematic lateral view of the mobile phone or portable PC of fig. 1, where the camera is in a position for detecting an object facing the backside of the mobile phone or portable PC at a mid- or long-distance behind the mobile phone or portable PC housing.

### Description of Preferred Embodiments

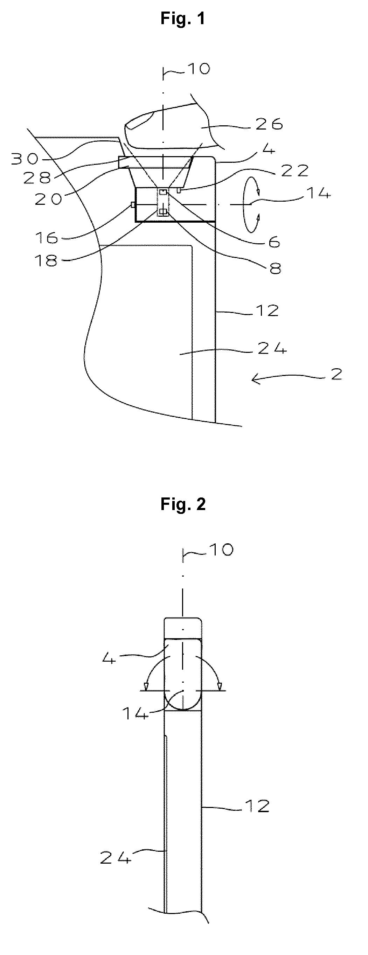

Fig. 1 shows a corner area of a mobile phone or portable PC 2 with a camera 18 according to a preferred embodiment of the invention. The mobile phone or portable PC 2 is provided with a substantially L shaped camera housing 4 forming a corner area of the mobile phone or portable PC housing 12. Inside the camera housing 4 a lens 6 and an image sensor 8 are arranged on an optical axis 10 that can be rotated relative to the transparent cover 20. The optical axis 10 is perpendicular to the rotational axis 14. A rotary encoder 16 is connected to the camera housing 4 for determining the angular position of the camera 18 relative to the mobile phone or portable PC housing 12. In this particular advantageous embodiment three different modes are associated to three respective angular positions. To trigger the first, the second or the third mode, the user manually rotates the camera 18 such that it is at a predefined angular position relative to the mobile phone or portable PC housing 12. The rotary encoder 16 that is operationally coupled to the mobile phone or portable PC 2 detects the relative position and the mobile phone or portable PC 2 executes an application installed thereon selected in accordance with the angular position detected by the rotary encoder 16.

In a first relative position, as illustrated in fig. 1 and fig. 2, the optical axis 10 lies substantially in the median plane of the mobile phone or portable PC 2, so as to intersect the transparent cover 20. In the first relative position, the first mode, is engaged. In the first mode, the mobile phone or portable PC 2 executes applications that are specifically designed for taking fingerprints or reading graphical data codes. As fingerprints can be used for numerous reasons, such as e.g. to gain access to a secured service or website, or to complete a transaction or a payment, their quality is of great importance. To guarantee their quality, a LED (light emitting diode) 22 that is arranged on the camera housing 4 is turned on and illuminates the fingertip 26, which is guided by the guiding element 30 and temporarily touching the input surface 28 of the transparent cover 20. The reflected light is captured by the image sensor 8 of the camera 18. The camera 18 takes a picture of the fingertip 26, which corresponds to a fingerprint. Thanks to the guiding element 30, the user can easily find the correct position of the fingertip. The guiding element thus enables repeatable positioning of the fingertip and facilitates fingerprint recognition by the image processing software running on the mobile device. Thanks to the LED 22, the luminous sensitivity of the image sensor 8 need not be particularly high, resulting in better image quality and thus a sharper fingerprint. A lens (not shown) is arranged in the transparent cover 20. The lens reduces the minimum focal distance of the camera 18. In consequence, the fingertip 26 that is close to the camera 18 (such as the fingertip 26) is sharply imaged onto the image sensor.

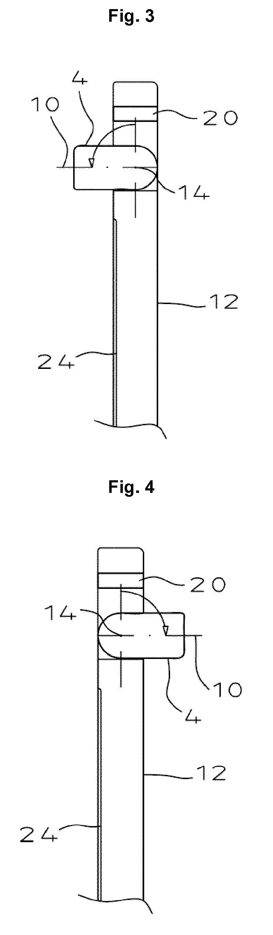

In a second relative position as shown in fig. 3, the camera 18 is at an angle of 90° (about the rotational axis 14) relative to the first relative position. In the second relative position the transparent cover 20 lies off the optical axis and the camera is used as a front camera. In this position, the mobile phone or portable PC may engage the second mode and launch corresponding applications. For instance, the mobile phone or portable PC can be used, in the second mode, for recording images or videos of objects that are at a mid distance (30 cm to 90 cm) from the camera lens 6, such as, e.g. a user's face to be transmitted for video telephony.

In fig. 4 the camera 18 is in the third relative position, in which the cover 20 also lies off the optical axis. In the third relative position, the camera 18 is at an angle of 90° (about the rotational axis 14) from the first relative position and at an angle of 180° from the second relative position. In this third relative position, the camera can be used as a back camera. The mobile phone or portable PC in this case is put into a third mode and may execute applications associated with the third relative position. For instance, in this mode, the camera may be specifically configured for taking pictures of objects at a "mid- or long" distance (i.e. at more than about 1 m) from the camera lens 6. In addition, In this mode of operation, camera could be configured to use the LED 22 as a flashlight.

### Legend:

- 2: mobile phone or portable PC
- 4: camera housing
- 6: lens
- 8: image sensor
- 10: optical axis
- 12: mobile phone or portable PC housing
- 14: rotational axis
- 16: rotary encoder
- 18: camera
- 20: transparent plastic cover
- 22: LED or flashlight
- 24: user display
- 26: fingertip
- 28: input surface
- 30: guiding element

## Claims

1. A mobile phone or a portable PC comprising:
a camera having an optical axis, and
a transparent cover,
**characterized in that**
said camera and said cover are arranged movable relative to each other in such a way that said camera and said cover can be brought into:
- a first relative position, in which said cover lies on said optical axis, and in which said camera and said cover form together an optical fingerprint sensor or an optical reader for reading graphical data codes; and
- a second relative position, in which said cover lies off said optical axis.

2. A mobile phone or a portable PC according to claim 1, wherein said camera comprises a lens and an image sensor.

3. A mobile phone or portable PC according to any one of the previous claims, wherein said cover and said camera are rotatable relative to each other in such a way that said camera and said cover can be brought into a first relative position and a second relative position.

4. A mobile phone or portable PC according to any one of the previous claims, wherein said cover and said camera are translatable relative to each other in such a way that said camera and said cover can be brought into a first and a second relative position.

5. A mobile phone or portable PC according to any one of the previous claims, wherein said cover comprises an optical element, said cover being an input surface being an object plane that is imaged through said optical element onto said image sensor, when said camera and said cover being is said first relative position.

6. A mobile phone or portable PC according to claim 5, wherein said optical element comprises a magnifying element.

7. A mobile phone or portable PC according to any one of the previous claims, wherein an angular encoder is operatively connected to said mobile phone or portable PC, said angular decoder being capable of detecting if said camera is in said first relative position or in said second relative position.

8. A mobile phone or portable PC according to any one of the previous claims, wherein said mobile phone comprises at least one corner, said camera being arranged in said corner.

9. A mobile phone or portable PC according to any one of the previous claims, wherein a light source is operatively connected to said mobile phone or portable PC for backlighting said transparent cover in said first relative position.

10. A mobile phone or portable PC according to claim 9, wherein said light source comprises a flash in said second relative position.

11. A mobile phone or portable PC according to any one of the claims 2 to 8, wherein an angle of rotation between said first relative position and said second relative position is substantially 90° .

12. A mobile phone or portable PC according to any one of the previous claims, wherein said camera can be rotated to a third relative position, in which said cover lies off said optical axis.
